# EUROPÄISCHE PATENTSCHRIFT

(11) **EP 2 895 648 B1**
(45) Veröffentlichungstag und Bekanntmachung des Hinweises auf die Patenterteilung: **08.06.2016**
(21) Anmeldenummer: 13745428.6
(22) Anmeldetag: 07.08.2013
(51) Int. Cl.: D02G 3/48

(54) **VERSTÄRKUNGSCORD FÜR ELASTOMERE ERZEUGNISSE, INSBESONDERE FÜR EINEN FAHRZEUGLUFTREIFEN, UND FAHRZEUGLUFTREIFEN**
REINFORCEMENT CORD FOR ELASTOMER PRODUCTS, IN PARTICULAR FOR A MOTOR VEHICLE AIR TIRE, AND MOTOR VEHICLE AIR TIRE
CÂBLE DE RENFORT POUR PRODUITS ÉLASTOMÈRES, EN PARTICULIER POUR UN PNEU DE VÉHICULE, ET PNEU DE VÉHICULE

(30) Priorität: 12.09.2012 DE 102012108523
(43) Veröffentlichungstag der Anmeldung: 22.07.2015
(73) Patentinhaber: Continental Reifen Deutschland GmbH, 30165 Hannover (DE)
(72) Erfinder: KRAMER, Thomas, 32049 Herford (DE); REESE, Wolfgang, 31228 Peine (DE); JUSTINE, Carole, 31535 Scharrel (DE)
(74) Vertreter: Finger, Karsten
(86) Internationale Anmeldenummer: PCT/EP2013/066514
(87) Internationale Veröffentlichungsnummer: WO 2014/040804

(56) Entgegenhaltungen:
- EERHART A J J E ET AL: "Replacing fossil based PET with biobased PEF; process analysis, energy and GHG balance", ENERGY & ENVIRONMENTAL SCIENCE, ROYAL SOCIETY OF CHEMISTRY, UK, Bd. 2012, Nr. 5, 15. Februar 2012 (2012-02-15), Seiten 6407-6422, XP002699114, ISSN: 1754-5692, DOI: 10.1039/C2EE02480B [gefunden am 2012-02-15]
- E. de Jong, M.A. Dam, L. Sipos, and G.-J. M. Gruter: "Furandicarboxylic Acid (FDCA), A Versatile Building Block for a Very Interesting Class of Polyesters", , 16. August 2012 (2012-08-16), XP002716722, Gefunden im Internet: URL:http://www.researchgate.net/publicatio n/234111253_Furandicarboxylic_acid_(FDCA)_ a_versatile_building_block_for_a_very_inte resting_class_of_polyesters/file/d912f512c 8c9ab0479.pdf

## Beschreibung

Die Erfindung betrifft einen Verstärkungscord für elastomere Erzeugnisse, insbesondere für einen Fahrzeugluftreifen, bestehend aus wenigstens einem Garn. Ferner betrifft die Erfindung einen Fahrzeugluftreifen, der zumindest einen erfindungsgemäßen Verstärkungscord enthält.

Verstärkungscorde als Festigkeitsträger für elastomere Erzeugnisse, insbesondere für Festigkeitsträgerlagen von Fahrzeugluftreifen, wie Karkasslage, Wulstverstärker, Gürtellage und Gürtelbandage, sind dem Fachmann in Aufbau und Material in verschiedensten Ausführungen bekannt. Die Verstärkungscorde werden während der Herstellung in eine Kautschukmischung eingebettet, um als gummierte Festigkeitsträgerlage im elastomeren Erzeugnis eingesetzt werden zu können.

Verstärkungscorde bestehen aus einem oder mehreren miteinander verdrehten Garnen. Dabei kann es sich bei zwei oder mehr Garnen um das gleiche Material handeln oder, wie im Fall der Hybridcorde, um wenigstens zwei verschiedene Garne.

Bisher werden in elastomeren Erzeugnissen, insbesondere in Karkasslagen, Wulstverstärkern, Gürteln oder Gürtelbandagen von Fahrzeugluftreifen, einerseits stofflich primär (unmittelbar) auf fossilen Rohstoffen - wie Erdöl - basierende textile Festigkeitsträger, wie beispielsweise PET (Polyethylenterephthalat), Aramid und Nylon oder Hybridcorde aus deren Garnen eingesetzt.

Andererseits ist es bekannt, nicht-erdölbasierte textile Festigkeitsträger aus Viskose, wie beispielsweise Rayon oder Lyocell einzusetzen.

Nachteilig an Naturfasern, also an nicht-erdölbasierten Materialien als Material für textile Festigkeitsträger ist, dass diese keine endlose Faserstruktur und eine stark schwankende Faserqualität aufweisen.

Zudem erschwert das fehlende Schrumpfverhalten die spezielle Anwendung von Rayon als Festigkeitsträger in der Gürtelbandage. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugluftreifen, zu entwickeln und einzusetzen, ohne Einbußen in der Haltbarkeit der daraus hergestellten Produkte hinnehmen zu müssen. So sind aus der DE 102010017107 A1 Hybridcorde für z.B. Karkasslagen und/oder Gürtelbandagen bekannt, die wenigstens aus einem Garn aus recyceltem PET bestehen.

Der vorliegenden Erfindung liegt nun die Aufgabe zu Grunde, einen Verstärkungscord für elastomere Erzeugnisse, insbesondere für einen Fahrzeugluftreifen, bestehend aus wenigstens einem Garn bereitzustellen, der eine Alternative zu herkömmlichen Verstärkungscorden ist, aus umweltfreundlichen und ressourcenschonenden Materialien besteht und gleichzeitig nachhaltig produziert werden kann. Zudem soll der Verstärkungscord eine gleichbleibende Produktqualität aufweisen.

Die Aufgabe wird gelöst, indem wenigstens ein Garn des Verstärkungscordes aus Polyethylenfuranat (PEF) besteht, wobei das PEF vollständig oder zumindest teilweise aus Biomassen und/oder nachwachsenden Rohstoffen hergestellt ist.

Die Strukturformel von Polyethylenfuranat (PEF) ist in der Formel (I) gezeigt. PEF entsteht formal durch Polykondensation von Monoethylenglycol (= MEG; 1,2-Ethandiol) und Furan-2,5-dicarbonsäure.

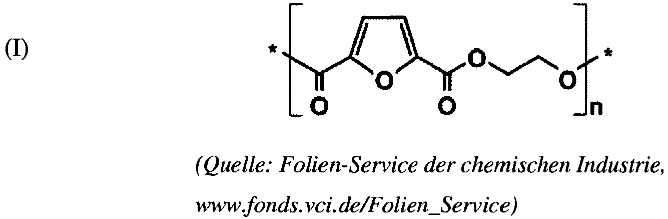

Für dieses Polymer wird im Stand der Technik zu nachwachsenden Rohstoffen neben Polyethylenfuranat auch die Bezeichnung Polyethylenfuranoat verwendet. Erfindungswesentlich ist, dass unter PEF ein Polymer gemäß der Struktur (I) verstanden wird.

Im Rahmen dieser Erfindung werden die Bezeichnungen Garn aus PEF und PEF-Garn synonym verwendet. Das PEF, das vollständig oder zumindest teilweise aus Biomassen und/oder nachwachsenden Rohstoffen hergestellt ist, wird im Rahmen der Erfindung auch als "PEF aus vollständig oder zumindest teilweise aus Biomassen und/oder nachwachsenden Rohstoffen" bezeichnet.

Die Verwendung von PEF aus Biomassen und/oder nachwachsenden Rohstoffen im erfindungsgemäßen Verstärkungscord für Festigkeitsträger von Elastomerprodukten ist nachhaltig, umweltfreundlich und ressourcenschonend. Zudem weist vollständig oder zumindest teilweise aus Biomassen und/oder nachwachsenden Rohstoffen erzeugtes PEF ebenfalls wie nur aus fossilen Rohstoffen gewonnenes PEF eine gleichbleibende Qualität auf. Somit kann eine gleichbleibende Produktqualität sichergestellt werden.

Dabei ist unter "PEF aus vollständig oder zumindest teilweise aus nachwachsenden Rohstoffen hergestellt" zu verstehen, dass das PEF - ungeachtet der Energiequelle bei der Herstellung - stofflich vollständig oder zumindest teilweise aus Biomassen und/oder nachwachsenden Rohstoffen hergestellt ist. PEF, das vollständig oder zumindest teilweise aus Biomassen und/oder nachwachsenden Rohstoffen besteht, wird nicht nur oder gar nicht (zu 0 Gew.-%) aus fossilen Rohstoffen wie Erdöl gewonnen.
Wie dem Fachmann bekannt ist, kann der Anteil der biobasierten Stoffe, also der Anteil aus nachwachsenden Rohstoffen und/oder Biomassen, im PEF gemäß der ASTM D 6866 (C-14-Methode) bestimmt werden.

Unter Biomassen wird im Rahmen der Erfindung "die Gesamtheit allen organischen Materials, das durch Wachstum und Stoffwechsel von Tieren, Pflanzen oder Mikroorganismen gebildet wird", verstanden (RÖMPP, Online Lexikon, Version 3.25). Unter nachwachsenden Rohstoffen werden im Rahmen der Erfindung land- und forstwirtschaftliche Produkte verstanden, die vom Menschen zielgerichtet für weiterführende Anwendungszwecke außer für Nahrungs- oder Futtermittel angebaut und/oder verwendet werden. Unter nachwachsenden Rohstoffen werden daher nicht fossile Quellen, wie Erdöl, verstanden, die durch Abbau zugänglich sind.
Der erfindungsgemäße Verstärkungscord kann jedoch PEF enthalten, welches vollständig oder zumindest teilweise aus Monomeren hergestellt ist, die ursprünglich zum Zweck der Verwendung als Nahrungs- oder Futtermittel angebaut wurden, aber z.B. aufgrund einer Umverteilung von Rohstoffen nicht als Nahrungs- oder Futtermittel sondern als nachwachsende Rohstoffe für den Einsatz im Verstärkungscord dienen. Etwaige Flächenkonflikte beim Anbau von Rohstoffen sollen sich demnach nicht einschränkend auf die Materialien der vorliegenden Erfindung auswirken.

Der Herstellung von PEF liegt das Monomer Furan-2,5-dicarbonsäureester, welches bevorzugt aus Biomassen gewonnen wird, zu Grunde, wie z.B. in der US 2011/0282020 beschrieben ist.
Es ist auch denkbar, dass das Monomer Furan-2,5-dicarbonsäure aus Biomassen gewonnen und verwendet wird.

Vorzugsweise werden nachwachsende Rohstoffe pflanzlicher Herkunft verwendet. So wird das dem PEF zu Grunde liegende Monomer Monoethylenglycol bevorzugt statt aus Erdöl aus nachwachsenden pflanzlichen Rohstoffen wie beispielsweise Zuckerrohr oder Melasse gewonnen.

Monoethylenglycol aus pflanzlichen Rohstoffen wird bereits kommerziell vertrieben. Dieses macht aufgrund seines Molekulargewichtes im PEF einen Massenanteil von 24,2% aus. Das andere Monomer Furan-2,5-dicarbonsäureester ist aufgrund seines Molekulargewichtes zu 75,8 Gew.-% in Polyethylenfuranat enthalten. Bevorzugt werden beide Monomere aus nachwachsenden Rohstoffen erzeugt. Es ist aber auch denkbar, dass nur eines der Monomere aus nachwachsenden Rohstoffen erzeugt ist. Z.B. besteht ein PEF, welches aus Monoethylenglycol aus rein pflanzlichen Rohstoffen und Furan-2,5-dicarbonsäureester aus rein fossilen Rohstoffen hergestellt ist, zu 24,2 Gew.-% aus nachwachsenden Rohstoffen.
Des Weiteren ist es denkbar, dass eines der beiden Monomere oder beide Monomere als Gemisch vorliegen, wobei das oder die Monomer(e) dann teilweise aus nachwachsenden Rohstoffen und teilweise aus Erdöl stammt bzw. stammen.

Es ist im Rahmen der vorliegenden Erfindung auch denkbar, dass jedes der Monomere Furan-2,5-dicarbonsäure oder Furan-2,5-dicarbonsäureester und Ethylenglycol (1,2-Ethandiol) vollständig aus Biomassen oder nachwachsenden Rohstoffen gewonnen werden können.

Das vollständig oder zumindest teilweise aus Biomassen und/oder nachwachsenden Rohstoffen hergestellte PEF kann dabei zusätzlich Verunreinigungen enthalten, wie organische Kohlenwasserstoffe, die auf die verwendeten Biomassen sowie die pflanzlichen Rohstoffe zurückzuführen sind. Es kann sich dabei z.B. um Saccharide handeln.

Erfindungswesentlich ist, dass wenigstens ein PEF-Garn des Verstärkungscordes vollständig oder zumindest teilweise aus Biomassen und/oder aus nachwachsenden Rohstoffen besteht. Das PEF kann dabei z.B. gemäß den folgenden Ausführungsformen zusammengesetzt sein.

In einer bevorzugten Ausführungsform der Erfindung besteht das PEF zu 10 bis 100 Gew.-%, bevorzugt zu 50 bis 100 Gew.-%, besonders bevorzugt zu 70 bis 100 Gew.-%, aus Biomassen und/oder nachwachsenden Rohstoffen, wobei die übrigen Gew.-%, die nicht PEF aus vollständig oder zumindest teilweise Biomassen und/oder nachwachsenden Rohstoffen sind, bei 100 Gew.-% PEF unmittelbar aus Erdöl erzeugt sind.
Hierbei kann es z.B. sein, dass nur das Monomer Furan-2,5-dicarbonsäure aus Biomassen oder nachwachsenden Rohstoffen gewonnen wird, während das Monomer Monoethylenglycol (1,2-Ethandiol) unmittelbar aus Erdöl gewonnen wird, also das PEF zu 75,8 Gew.-% aus Biomassen und/oder nachwachsenden Rohstoffen und zu 24,2 Gew.-% aus erdölbasierten Rohstoffen besteht.
Es ist auch denkbar, dass das nur das Monomer Monoethylenglycol aus nachwachsenden Rohstoffen gewonnen wird, während das Monomer Furan-2,5-dicarbonsäure aus Erdöl gewonnen wird, also das PEF zu 24,2 Gew.-% aus nachwachsenden Rohstoffen und zu 75,8 Gew.-% aus erdölbasierten Rohstoffen besteht.

Um auf Erdöl als primäre stoffliche Quelle für PEF ganz verzichten zu können, ist es besonders bevorzugt, wenn das PEF vollständig, also zu 100 Gew.-% aus Biomassen und/oder nachwachsenden Rohstoffen besteht.

In den nachfolgenden Ausführungen wird "PEF aus vollständig oder zumindest teilweise Biomassen und/oder nachwachsenden Rohstoffen" auch kürzer mit "PEF aus Biomassen und/oder nachwachsenden Rohstoffen" bezeichnet. Es sind aber immer die oben genannten Ausführungsformen mit Anteilen von erdölbasierten Rohstoffen eingeschlossen.

Das wenigstens eine Garn aus PEF aus Biomassen und/oder nachwachsenden Rohstoffen des erfindungsgemäßen Verstärkungscordes ist mit 100 bis 600 t/m, bevorzugt mit 100 bis 550 t/m, besonders bevorzugt mit 200 bis 550 t/m verdreht.

Bevorzugt enthält der erfindungsgemäße Verstärkungscord wenigstens ein weiteres Garn, wobei das wenigstens eine Garn aus PEF aus vollständig oder zumindest teilweise Biomassen und/oder nachwachsenden Rohstoffen und das wenigstens eine weitere Garn mit 100 bis 600 t/m, bevorzugt mit 100 bis 550 t/m, besonders bevorzugt mit 200 bis 550 t/m, miteinander endverdreht sind.

In einer bevorzugten Ausführungsform der Erfindung, bestehen alle Garne des Cordes aus PEF aus (vollständig oder zumindest teilweise) Biomassen und/oder nachwachsenden Rohstoffen.

Hierdurch kann z.B. ein üblicher PET-Verstärkungscord durch einen Verstärkungscord, welcher aus PEF aus Biomassen und/oder nachwachsenden Rohstoffen besteht, ersetzt werden. PEF weist eine Glasübergangstemperatur von 86 °C auf, welche höher ist als die von Polyethylenterephthalat mit 74 °C. Daraus ergibt sich erwartungsgemäß für die Anwendung als Material für Verstärkungscorde in Festigkeitsträgerlagen von Fahrzeugluftreifen eine erhöhte Dimensionsstabilität des Reifens im Fall von PEF gegenüber PET.

Je nach Wahl der Produktionsparameter weist ein Verstärkungscord aus wenigstens einem PEF-Garn ähnliche Eigenschaften wie ein üblicher, das heißt wie ein stofflich unmittelbar aus Erdöl hergestellter PET-Verstärkungscord (regular bzw. HMLS high modulus low shrinkage) auf.

Es ist aber auch denkbar, dass je nach Wahl der Produktionsparameter, Eigenschaften ähnlich einem Verstärkungscord aus Polyamid eingestellt werden können.

In einer weiteren bevorzugten Ausführungsform der Erfindung, ist der Verstärkungscord ein Hybridcord, bei dem wenigstens ein Garn des Cordes aus einem anderen Material als PEF aus Biomassen und/oder nachwachsenden Rohstoffen besteht, während das (die) übrige(n) Garn (e) aus PEF aus Biomassen und/oder nachwachsenden Rohstoffen bestehen. Der Verstärkungscord ist somit teilweise nachhaltig, umweltfreundlich und ressourcenschonend gestaltet und bietet als weiteren Vorteil die Möglichkeit der definierten Einstellung des Verstärkungscordes durch eine gezielte Materialauswahl des wenigstens einen weiteren Garnes.

Es ist im Rahmen einer vorteilhaften Weiterbildung der vorliegenden Erfindung denkbar, dass der Verstärkungscord aus wenigstens einem Garn aus PEF aus Biomassen und/oder nachwachsenden Rohstoffen und wenigstens einem Garn aus PET, welches unmittelbar aus Erdöl und/oder aus recyceltem PET hergestellt ist, besteht.

Gemäß einer weiteren vorteilhaften Weiterbildung der Erfindung besteht der Verstärkungscord aus wenigstens einem Garn aus PEF aus vollständig oder zumindest teilweise Biomassen und/oder nachwachsenden Rohstoffen und wenigstens einem weiteren Garn aus einem nichtmetallischen Material. Das nichtmetallische Material ist ausgewählt aus der Gruppe enthaltend Polyamid- (PA) und/oder Aramid- und/oder Polyetherketon-(PEK-) und/oder Polyketon- (POK-) und/oder Polyethylennaphthalat- (PEN-) und/oder Rayon- und/oder Viskose- und/oder Naturfasern und/oder Glasfasern.
Der gesamte Hybridcord ist damit größtenteils oder ganz aus nicht-primär-erdölbasierten Materialien hergestellt und kann durch geeignete Materialauswahl der Garne definiert in seinen Eigenschaften eingestellt sein.

Um ein höheres Schrumpfverhalten des Verstärkungscordes zu erhalten, ist es gemäß einer weiteren vorteilhaften Weiterbildung der Erfindung bevorzugt, wenn er aus wenigstens einem Garn aus PEF aus vollständig oder zumindest teilweise Biomassen und/oder nachwachsenden Rohstoffen und wenigstens einem Garn aus Polyamid (PA) besteht. Dieses ist insbesondere für die Verwendung dieses Hybridcordes in der Gürtelbandage eines PKW-Reifens von Vorteil.

Besonders bevorzugt besteht das Garn aus PA aus PA6.6- und/oder PA6-Fasern und/oder PA10.10-Fasern und/oder PA10.12-Fasern.

Ganz besonders bevorzugt besteht das Garn aus PA aus PA6.6-Fasern.

Um einen höheren Modul des Verstärkungscordes zu erhalten, besteht er aus wenigstens einem Garn aus PEF aus vollständig oder zumindest teilweise Biomassen und/oder nachwachsenden Rohstoffen und wenigstens einem Garn aus Aramid. Dieses ist insbesondere für die Verwendung dieses Hybridcordes in der Gürtelbandage von UHP-(Ultra High Performance-) Reifen von Vorteil.

Um einen stabilen Verstärkungscord weitgehend ohne Schrumpf zu erhalten, besteht er aus wenigstens einem Garn aus PEF aus vollständig oder zumindest teilweise Biomassen und/oder nachwachsenden Rohstoffen und wenigstens einem Garn aus Rayon. Dieses ist insbesondere für die Verwendung dieses Hybridcordes in der Karkasse von PKW-Reifen und für das Hochgeschwindigkeits-Verhalten von PKW-Reifen von Vorteil.

Zweckmäßig ist es, wenn der Titer eines jeden Garnes des erfindungsgemäßen Verstärkungscordes zwischen 200 und 5000 dtex beträgt und wenn die Verdrehung der vorverdrehten Materialien zwischen 100 und 600 t/m beträgt.

Die eingesetzten Garne des Verstärkungscordes können dabei jeweils aus in S- oder Z-Richtung verdrehten Fasern aufgebaut sein. Somit kann z.B. das PEF-Garn aus Biomassen und/oder nachwachsenden Rohstoffen S- oder Z-verdreht sein.

Die verdrehten Garne werden erfindungsgemäß in S- oder Z-Richtung zu einem Verstärkungscord endverdreht. Vorteilhafterweise weisen die Garne eines Verstärkungscordes alle die gleiche Drehrichtung auf, d.h. sie sind entweder in S- oder Z-Richtung verdreht. In dieser vorteilhaften Variante weist der Verstärkungscord die den Garnen entgegengesetzte Drehrichtung auf. So kann z.B. ein S-verdrehtes PEF-Garn aus Biomassen und/oder nachwachsenden Rohstoffen mit einem S-verdrehten Aramidgarn in Z-Richtung zu einem Verstärkungscord endverdreht sein.

Um eine zuverlässige Haftung von textilen Festigkeitsträgern zum Gummi zu gewährleisten, ist es zweckmäßig, den erfindungsgemäßen Verstärkungscord mit einer Haftimprägnierung, z.B. mit einem RFL-Dip im 1- oder 2-Bad-Verfahren, zu versehen.

Die Erfindung betrifft auch einen Fahrzeugluftreifen, der zumindest einen erfindungsgemäßen Verstärkungscord enthält. Bevorzugt enthält der Fahrzeugluftreifen den Verstärkungscord in der Karkasslage und/oder in wenigstens einer Gürtellage und/oder als Wulstverstärker und/oder in der Gürtelbandage. Besonders bevorzugt enthält der Fahrzeugluftreifen den Verstärkungscord in der Karkasslage.

## Patentansprüche

1. Verstärkungscord für elastomere Erzeugnisse, insbesondere für einen Fahrzeugluftreifen, bestehend aus wenigstens einem Garn, **dadurch gekennzeichnet, dass**
wenigstens ein Garn aus Polyethylenfuranat (PEF) besteht, wobei das PEF vollständig oder zumindest teilweise aus Biomassen und/oder nachwachsenden Rohstoffen hergestellt ist.

2. Verstärkungscord nach Anspruch 1, **dadurch gekennzeichnet, dass** das PEF zu 10 bis 100 Gew.-% aus Biomassen und/oder nachwachsenden Rohstoffen hergestellt ist.

3. Verstärkungscord nach einem der Ansprüche 1 oder 2, **dadurch gekennzeichnet, dass** das Garn aus PEF aus vollständig oder zumindest teilweise Biomassen und/oder nachwachsenden Rohstoffen mit 100 bis 600 t/m verdreht ist.

4. Verstärkungscord nach einem der Ansprüche 1 bis 3, **dadurch gekennzeichnet, dass** er wenigstens ein weiteres Garn enthält, wobei das wenigstens eine Garn aus PEF aus vollständig oder zumindest teilweise Biomassen und/oder nachwachsenden Rohstoffen und das wenigstens eine weitere Garn mit 100 bis 600 t/m miteinander endverdreht sind.

5. Verstärkungscord nach einem der Ansprüche 1 bis 4, **dadurch gekennzeichnet, dass** alle Garne des Cordes aus PEF aus vollständig oder zumindest teilweise Biomassen und/oder nachwachsenden Rohstoffen bestehen.

6. Verstärkungscord nach einem der Ansprüche 1 bis 4, **dadurch gekennzeichnet, dass** er aus wenigstens einem Garn aus PEF aus vollständig oder zumindest teilweise Biomassen und/oder nachwachsenden Rohstoffen und wenigstens einem weiteren Garn aus einem nichtmetallischem Material besteht.

7. Verstärkungscord nach einem der Ansprüche 1 bis 6, **dadurch gekennzeichnet, dass** der Titer eines jeden Garnes zwischen 200 und 5000 dtex beträgt und dass die Verdrehung eines jeden Garnes zwischen 100 und 600 t/m beträgt.

8. Fahrzeugluftreifen, **dadurch gekennzeichnet, dass** dieser zumindest einen Verstärkungscord nach einem der Ansprüche 1 bis 7 aufweist.

9. Fahrzeugluftreifen nach Anspruch 8, **dadurch gekennzeichnet, dass** dieser zumindest einen Verstärkungscord in der Karkasslage und/oder in wenigstens einer Gürtellage und/oder als Wulstverstärker und/oder der Gürtelbandage enthält.

## Claims

1. Reinforcement cord for elastomeric articles of manufacture, in particular for a pneumatic vehicle tire, consisting of at least one yarn, **characterized in that**
at least one yarn consists of polyethylene furanate (PEF), wherein said PEF is wholly or at least partly produced from biomasses and/or renewable raw materials.

2. Reinforcement cord according to Claim 1, **characterized in that** said PEF is 10 to 100 wt% produced from biomasses and/or renewable raw materials.

3. Reinforcement cord according to either of Claims 1 and 2, **characterized in that** the yarn of PEF from wholly or at least partly biomasses and/or renewable raw materials has a single twist of 100 to 600 t/m.

4. Reinforcement cord according to any of Claims 1 to 3, **characterized in that** it contains at least one further yarn, wherein the at least one yarn of PEF from wholly or at least partly biomasses and/or renewable raw materials and the at least one further yarn have a cable twist of 100 to 600 t/m.

5. Reinforcement cord according to any of Claims 1 to 4, **characterized in that** all yarns of the cord consist of PEF from wholly or at least partly biomasses and/or renewable raw materials.

6. Reinforcement cord according to any of Claims 1 to 4, **characterized in that** it consists of at least one yarn of PEF from wholly or at least partly biomasses and/or renewable raw materials and at least one further yarn of a nonmetallic material.

7. Reinforcement cord according to any of Claims 1 to 6, **characterized in that** the linear density of every yarn is between 200 and 5000 dtex and **in that** the single twist of every yarn is between 100 and 600 t/m.

8. Pneumatic vehicle tire, **characterized in that** it includes at least a reinforcement cord according to any of Claims 1 to 7.

9. Pneumatic vehicle tire according to Claim 8, **characterized in that** it contains at least a reinforcement cord in the carcass ply and/or in at least one belt ply and/or as bead reinforcer and/or the belt bandage.

## Revendications

1. Câblé de renfort pour produits élastomères, en particulier pour un pneumatique de véhicule, consistant en au moins un fil, **caractérisé en ce qu'**au moins un fil est constitué de poly(furannoate d'éthylène) (PEF), le PEF étant en totalité ou au moins en partie préparé à partir de biomasses et/ou de matières premières renouvelables.

2. Câblé de renfort selon la revendication 1, **caractérisé en ce que** le PEF est préparé à raison de 10 à 100 % en poids à partir de biomasses et/ou de matières premières renouvelables.

3. Câblé de renfort selon l'une des revendications 1 ou 2, **caractérisé en ce que** le fil en PEF obtenu en totalité ou au moins en partie à partir de biomasses et/ou de matières premières renouvelables est retordu à raison de 100 à 600 t/m.

4. Câblé de renfort selon l'une des revendications 1 à 3, **caractérisé en ce qu'**il contient au moins un autre fil, le ou les fils en PEF obtenus en totalité ou au moins en partie à partir de biomasses et/ou de matières premières renouvelables, et le ou les autres fils, ont subi une torsion finale les uns avec les autres à raison de 100 à 600 t/m.

5. Câblé de renfort selon l'une des revendications 1 à 4, **caractérisé en ce que** tous les fils du câblé sont constitués de PEF obtenu en totalité ou au moins en partie à partir de biomasses et/ou de matières premières renouvelables.

6. Câblé de renfort selon l'une des revendications 1 à 4, **caractérisé en ce qu'**il est constitué d'au moins un fil de PEF obtenu en totalité ou au moins en partie à partir de biomasses et/ou de matières premières renouvelables et d'au moins un autre fil en un matériau non métallique.

7. Câblé de renfort selon l'une des revendications 1 à 6, **caractérisé en ce que** le titre de chaque fil est de 200 à 5000 dtex, et que la torsion de chaque fil est comprise entre 100 et 600 t/min.

8. Pneumatique de véhicule, **caractérisé en ce qu'**il comprend au moins un câblé de renfort selon l'une des revendications 1 à 7.

9. Pneumatique de véhicule selon la revendication 8, **caractérisé en ce qu'**il contient au moins un câblé de renfort dans la nappe de carcasse et/ou dans au moins une nappe de ceinture et/ou en tant que renfort de talon, ou dans le bandage de ceinture.
